# EUROPEAN PATENT APPLICATION

(11) **EP 4 716 280 A1**
(43) Date of publication of application: **25.03.2026**
(21) Application number: 25202235.5
(22) Date of filing: 15.09.2025
(51) Int. Cl.: H04W 24/02, H04W 88/12, H04W 88/18

(54) **SCALING OF OPEN RADIO ACCESS NETWORK (O-RAN) APPLICATIONS**

(30) Priority: 20.09.2024 GR 20240100642; 30.06.2025 US 202519255107
(71) Applicant: Juniper Networks, Inc., Sunnyvale, CA 94089-1206 (US)
(72) Inventor: AKMAN, Arda, Sunnyvale, 94089 (US); KRISHNAMOORTHY, Rajasree, Sunnyvale, 94089 (US); POLYCHRONOPOULOS, Constantine Dimitrios, Sunnyvale, 94089 (US); SAHIN, Burcu, Sunnyvale, 94089 (US); OIKONOMOU, Georgios, Sunnyvale, 94089 (US)
(74) Representative: D Young & Co LLP

(57) **Abstract**

An example Radio Access Network Intelligent Controller (RIC) determines that operation of a first instance of an application satisfies one or more criteria for scaling the application, the first instance of the application processing cluster messages generated by the RAN. The RIC, in response to determining that the operation of the first instance of the application satisfies the one or more criteria, determines a first virtual cluster and a second virtual cluster of the RAN. The first virtual cluster includes first one or more resources of the RAN and the second virtual cluster includes second one or more resources of the RAN. The RIC instantiates a second instance of the application. The RIC routes cluster messages from the second one or more resources of the second virtual cluster to the second instance of the application.

## Description

This application claims the benefit of US Patent Application No. 19/255,107, filed 30 June 2025 and claims the benefit of GR Patent Application No. 20240100642, filed 20 September 2024; the entire content of each application is incorporated herein by reference.

### TECHNICAL FIELD

The disclosure relates to computer networking and, more specifically, to scaling of Open Radio Access Network (O-RAN) applications of functions and services with a radio intelligent controller.

### BACKGROUND

Computer networks have become ubiquitous, and the number of network applications, network-connected devices, and types of network-connected devices are rapidly expanding. Such devices now include computers, smartphones, Internet-of-Things (IoT) devices, vehicles, medical devices factory equipment, etc. 5G mobile network architectures enhanced the ability to provide communication services using cloud-based network function virtualization (NFV). Specialized networks can be created using the Radio Access Network (RAN) of a mobile network operator combined with functions of a 5G core. For example, networks can be created for a specific service level agreement (SLA), special use cases, or other specific requirements. Examples of such networks include private mobile networks, industrial networks, a dedicated network for connected vehicles, etc.

### SUMMARY

In general, this disclosure describes techniques for scaling applications, such as xApps and rApps of a mobile network. The mobile network may include one or more RAN Intelligent Controllers (RIC) for a RAN. For example, a network system may include a Service Management and Orchestration (SMO) framework offering various framework functions along with a non-real-time (non-RT) RIC, configured in accordance with Open Radio Access Network (O-RAN) standards (the network system being referred to hereinafter as an "O-RAN architecture"), to manage and/or monitor aspects of a RAN and/or 5G core. The O-RAN architecture may include a non-RT RIC and a near-real-time RIC (near-RT RIC) that each executes different functions and services for RAN functions. For example, the non-RT RIC is an orchestration and automation function configured to provide radio resource management, higher layer procedure optimization, policy optimization, and provide guidance, parameters, policies and AI/ML models to support the operation of near-RT RIC functions in the RAN. The non-RT RIC may onboard one or more applications (e.g., rApps) that provide non-real time (e.g., greater than one second) control of RAN elements and their resources, and the near-RT RIC may onboard one or more applications (e.g., xApps) that provide near-real time control of RAN elements and their resources.

A mobile network may include thousands of base stations and potentially tens or hundreds of thousands of cells that RICs are controlling and/or managing. In addition to cell level control, there may be hundreds or thousands of user equipment (UEs) using each cell that a RIC controls and/or manages. This large number of cells and UEs may easily outpace the performance a single instance of a non-RT RIC or a near-RT RIC.

Because a mobile network may include more base stations and/or UEs than can be managed by a single RIC, the mobile network may be divided into a plurality of clusters. A RIC instance can manage one or more clusters. A cluster may be a geographically contiguous smaller portion of a mobile network. For example, a cluster may include a number of base stations that are geographically proximate to one another, for example. In this manner, a mobile network may be divided into a plurality of clusters in which each cluster covers a particular contiguous geographic area. In managing resources of a cluster, applications and resources of the cluster may exchange cluster messages. A cluster message may include a message between one or more resources of a cluster and an instance of an application.

According to the techniques of this disclosure, a RIC, such as a non-RT RIC or a near-RT RIC may be configured to provide functionality for scaling applications, such as rApps or xApps (which may be alternatively referred to herein collectively as r/xApps). The RIC may determine a plurality of virtual clusters from a cluster of a mobile network to scale an application and may split communications to/from the plurality of virtual clusters between an existing, first instance of the application and a new, second instance of the application. For example, the RIC may configure microservices, such as A1, O1, O2, and/or E2 microservices, to route new cluster messages from a second virtual cluster to the second instance of the application and may continue to route new cluster messages from the first virtual cluster (which is part of the cluster being split) to the first instance of the application, thereby distributing a workload of the cluster across the first instance of the application and the second instance of the application between two virtual clusters.

The techniques described herein may provide one or more technical advantages that realize at least one practical application. For example, the techniques of this disclosure may provide for the scaling of applications prior to the applications becoming overloaded and failing. Failure of an application may negatively affect the functioning of a network and may disrupt and/or diminish the quality of communications over the network and may cause dropped calls and/or data connections. As such, the techniques of this disclosure may improve network operations and connectivity. The techniques may enable the RIC to scale an application that is not natively scalable, i.e., the application is not deployed and/or manufactured in a manner that enables the application itself to manage scaling and load balancing. Rather, as described in detail below, the RIC causes or instantiates new instances of such a "non-scalable" application and, by intelligently routing virtual cluster messages from different virtual clusters, effectively spoofs the application instances into managing different virtual clusters.

In one example, a RIC for a RAN includes processor circuitry; and memory coupled to the processor circuitry, the memory storing instructions that, when executed, cause the processor circuitry to: determine that operation of a first instance of an application satisfies one or more criteria for scaling the application, the first instance of the application processing cluster messages generated by the RAN; in response to determining that the operation of the first instance of the application satisfies the one or more criteria, determine a first virtual cluster and a second virtual cluster of the RAN, wherein the first virtual cluster includes first one or more resources of the RAN and the second virtual cluster includes second one or more resources of the RAN, the first one or more resources of the RAN and the second one or more resources of the RAN being different; instantiate a second instance of the application; and route cluster messages from the second one or more resources of the second virtual cluster to the second instance of the application.

In another example, a method includes determining, by a RIC, that operation of a first instance of an application satisfies one or more criteria for scaling the application, the first instance of the application processing cluster messages generated by the RAN; determining, by the RIC and in response to determining that the operation of the first instance of the application satisfies the one or more criteria, a first virtual cluster and a second virtual cluster of the RAN, wherein the first virtual cluster includes first one or more resources of the RAN and the second virtual cluster includes second one or more resources of the RAN, the first one or more resources of the RAN and the second one or more resources of the RAN being different; instantiating, by the RIC, a second instance of the application; and configuring, by the RIC, one or more microservices to route cluster messages from the second one or more resources of the second virtual cluster to the second instance of the application.

In another example, computer-readable storage media comprises (e.g. stores and/or conveys) instructions that, when executed, cause one or more processors of a RIC to determine that operation of a first instance of an application satisfies one or more criteria for scaling the application, the first instance of the application processing cluster messages generated by the RAN;
in response to determining that the operation of the first instance of the application satisfies the one or more criteria, determine a first virtual cluster and a second virtual cluster of the RAN, wherein the first virtual cluster includes first one or more resources of the RAN and the second virtual cluster includes second one or more resources of the RAN, the first one or more resources of the RAN and the second one or more resources of the RAN being different; instantiate a second instance of the application; and route cluster messages from the second one or more resources of the second virtual cluster to the second instance of the application.

The details of one or more examples are set forth in the accompanying drawings and the description below. Other features, objects, and advantages will be apparent from the description and drawings, and from the claims.

### BRIEF DESCRIPTION OF DRAWINGS

FIG. 1A is a block diagram illustrating an example network system configured to provide scaling of application services for a RAN, in accordance with one or more techniques of the disclosure.
FIG. 1B is a block diagram illustrating further example details of the Non-RT RIC of the Service Management and Orchestration of FIG. 1A.
FIG. 1C is a block diagram illustrating further example details of the Near-RT RIC of FIG. 1A.
FIG. 2 is a conceptual diagram illustrating an example cluster and two virtual clusters according to one or more aspects of this disclosure.
FIG. 3 is a block diagram illustrating an example computing system in accordance with the techniques of this disclosure.
FIG. 4 is a flow diagram of example application scaling techniques for non-scalable applications according to one or more aspects of this disclosure.
FIG. 5 is a flow diagram of example application scaling techniques for scalable applications according to one or more aspects of this disclosure.
FIG. 6 is a flow diagram illustrating example scaling techniques for applications according to one or more aspects of this disclosure.

Like reference characters refer to like elements throughout the text and figures.

### DETAILED DESCRIPTION

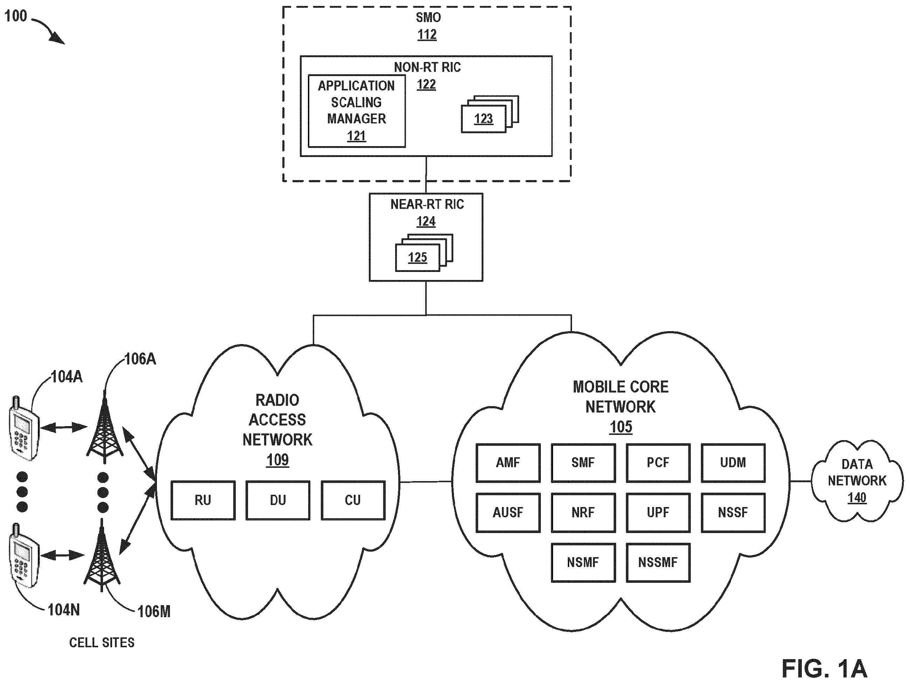

FIG. 1A is a block diagram illustrating an example network system configured to provide scaling of application services for a RAN, in accordance with one or more techniques of the disclosure. In the example illustrated in FIG. 1A, network system 100 includes Service and Management Orchestrator (SMO) 112, non-RT RIC 122, near-RT RIC 124, one or more radio access networks (RANs), e.g., RAN 109, and mobile core network (or simply "core") 105 that provide user equipment 104A-104N (collectively, "UEs 104") with access to one or more applications or services provided by data network 140. In the example of FIG. 1A, non-RT RIC 122 includes application scaling manager 121.

UEs 104 may represent smartphones, desktop computers, laptop computers, tablets, smart watches, and/or "Internet-of-Things" (IOT) devices, such as cameras, sensors, televisions, appliances, or the like. As shown in FIG. 1A, network system 100 includes RAN 109 that provides network access, data transport, and other services to UEs 104. In some examples, RAN 109 may be an Open Radio Access Network (O-RAN), a 5G mobile network RAN, a 4G LTE mobile network RAN, another type of RAN, or a combination of the above. For example, in a 5G-radio access network, RAN 109 comprises a plurality of cell sites (or simply "cells") that each include radio equipment, such as base stations 106A-106M (collectively, "base stations 106"), which may also be referred to as gNodeBs, to exchange packetized data within a data network to ultimately access one or more applications or services provided by data network 140. While represented in FIG. 1A as towers, each of base stations 106 is divided into three functional components: radio unit (RU), distributed unit (DU), and central unit (CU), which can be deployed in various configurations. RU manages the radio frequency layer and has antenna arrays of various sizes and shapes. DU performs lower layer protocol processing. CU performs the upper layer protocol processing. Depending on operator and service requirements, base stations 106 can be deployed monolithically, e.g., RU, DU, and CU reside within a particular geographically located cell site, or these functionalities can be distributed across geographically different cell sites while the CU resides in an edge cloud site controlling a plurality of distributed DUs. O-RAN is, for example, an approach to networking in which disaggregated functions can be used to deploy mobile front-haul and mid-haul networks. The disaggregated functions can be cloud-based functions.

Radio access networks 109 connect to core 105 to exchange packets with data network 140. Core 105 may be a 5G core network, and data network (DN) 140 may represent, for example, one or more service provider networks and services, the Internet, third party services, one or more IP-VPNs, an IP-multimedia subsystem, a combination thereof, or other network or combination of networks. In some examples, resources associated with the service provided by a mobile network operator to the tenant may be provided by, or managed by, functions of core 105 and/or components of RAN 109. In some examples, core 105 implements various discrete control plane and user plane functions for network system 100. Examples of 5G control plane functions that may be provided by core 105 include Access Mobility Management Function (AMF) that provides access mobility management services, Session Management Function (SMF) that provides session management services, Policy Control Function (PCF) that provides policy control services, User Data Management (UDM) that provides management of network user data, Network Repository Function (NRF) that provides a repository that can be used to register and discover services in a network operator's network, Authentication Server Function (AUSF) that provides authentication services, Network Slice Selection Function (NSSF), Network Slice Management Function (NSMF) that may be used to select an instance of an available network slice for use by any of UE devices 104, and Network Slice Subnet Management Function (NSSMF) that provides coordination, management, and orchestration of network slice subnet instances (NSSI). Core 105 may also include User Plane Functions (UPF) that provides packet routing, forwarding and other network data processing functions (e.g., Quality of Service, packet inspection, traffic optimization etc.). Further details on services and functions provided by the 5G core can be found in 3^{rd} Generation Partnership Project Technical Specification Group Services and System Aspects; System architecture for the 5G System (5GS); Stage 2 (Release 18), TS 23.501 V18.2.2 (2023-07), the entire contents of which is hereby incorporated by reference. Further details on the O-RAN architecture can be found in O-RAN Alliance, "O-RAN Work Group 1 (Use Cases and Overall Architecture) O-RAN Architecture Description," O-RAN.WG1.OAD-R003-v12.00, June 2024, the entire contents of which is hereby incorporated by reference.

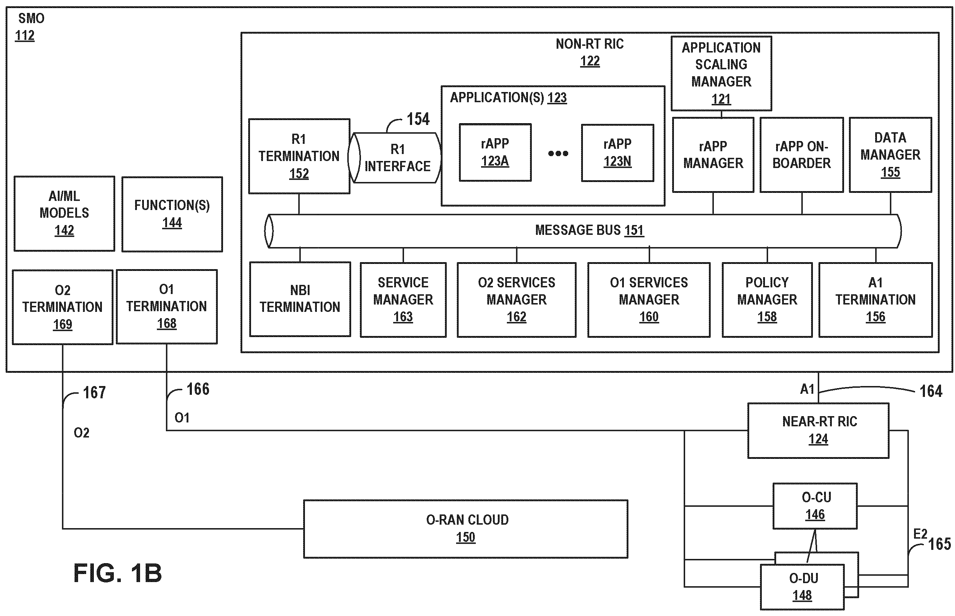

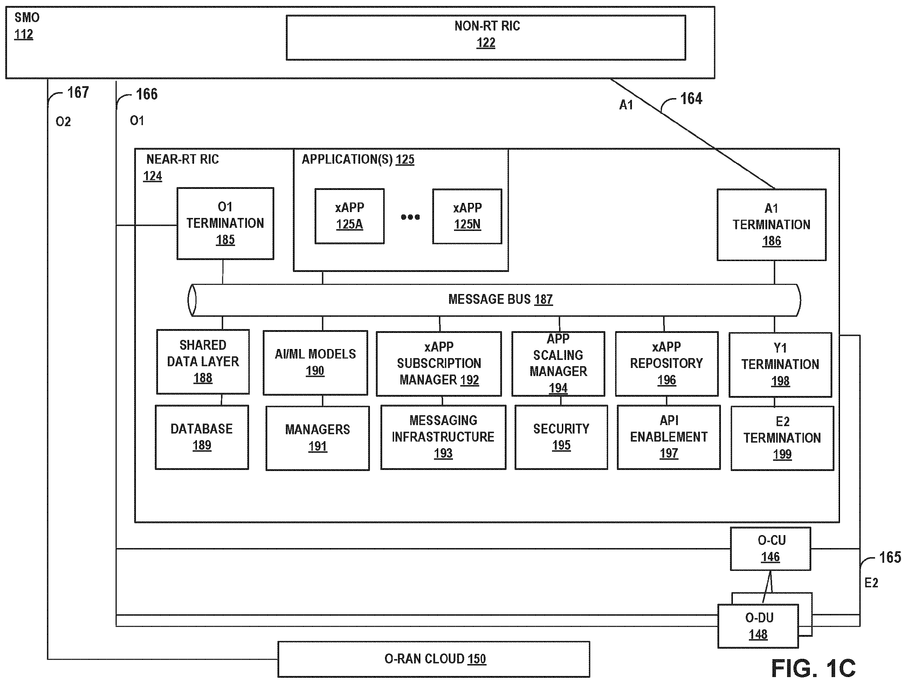

Aspects of RAN 109 and/or core 105 may be managed and/or monitored by SMO 112, non-RT RIC 122, and near-RT RIC 124. In some examples, SMO 112, non-RT RIC 122, and near-RT RIC 124 may be operated by the mobile network operator providing 5G services to a tenant. SMO 112 can orchestrate and control management and automation aspects of RAN 109 (e.g., network slicing, management, and orchestration of O-Cloud, etc.). Further, SMO 112 may control aspects of non-RT RIC 122 and near-RT RIC 124. Non-RT RIC 122 can provide non-real-time (e.g., greater than one second) control and optimization of RAN elements and resources such as RUs, DUs, and CUs, workflow management, and policy-based control of applications and features of near-RT RIC 124. Near-RT RIC 124 can provide near-real-time (e.g., milliseconds) control and optimization of RAN elements and resources via fine-grained data collection and actions. As further described in FIG. 1B and FIG. 1C, non-RT RIC 122 and near-RT RIC 124 may deploy as a highly scalable, microservices based containerized architecture, such as a Kubernetes architecture. In some examples, near-RT RIC 124 may be located within an edge or regional cloud.

Non-RT RIC 122 may onboard one or more applications, e.g., applications 123, which may include rApps that manage non-real time events within non-RT RIC 122, such as applications that do not require response times of less than one second. Applications 123 may leverage the functionality exposed via the non-RT RIC framework of non-RT RIC 122. Applications 123 may be used to control and manage RAN elements and resources, such as near-RT RIC 124, RAN nodes, and/or resources in the O-RAN cloud. Applications 123 may also utilize network data, performance metrics, and subscriber data to provide recommendations for network optimization and operational guidance (e.g., policies) to one or more applications of near-RT RIC 124. Near-RT RIC 124 may onboard one or more applications, e.g., applications 125, which may include xApps, that manage near-real time events within near-RT RIC 124. Applications 125 may leverage the functionality exposed via the near-RT RIC framework of near-RT RIC 124. Near-RT RIC 124 may enforce policies received from applications 123 of non-RT RIC 122 and may provide policy feedback to non-RT RIC 122. Although illustrated as within non-RT RIC 122, any one or more of applications 123 may be executed by a third party, separate from non-RT RIC 122. Likewise, although illustrated as within near-RT RIC 124, any one or more of applications 125 may be executed by a third party, separate from near-RT RIC 124.

The O-RAN architecture includes several interfaces, such as A1, O1, O2, and E2 interfaces, that are each used to provide the functions and services by which the SMO and RIC can configure or direct other components of the RAN. For example, the functions and services of non-RT RIC may include policy management services and/or enrichment information services for a near-RT RIC that are provided over an A1 interface (collectively referred to herein as "A1 services" because they provided over the A1 interface); performance management services, configuration management services, and/or Operations, Administration, and Management (OAM) services for O-RAN management elements that are provided over an O1 interface (referred to herein as "O1 services" because they are provided over the O1 interface); configuration management services and performance management services for resources of an O-RAN cloud that are provided over an O2 interface (referred to herein as "O2 services" because they are provided over the O2 interface), and/or other services, such as service management and exposure (SME) services (e.g., registration of a service, update of a service registration), data management and exposure (DME) services, and/or AI/ML services. The functions and services for a near-RT RIC may include control procedures and functionalities to control O-RAN elements, such as radio units (RUs), distributed units (DUs), and central units (CUs), that are provided over an E2 interface and may be referred to as "E2 services" because they are provided over the E2 interface.

As described further below, non-RT RIC 122 may provide services using A1 and O1 interfaces. An A1 interface connects the non-RT RIC 122 and near-RT RIC 124. Non-RT RIC 122 may perform services via the A1 interface, such as policy management services (e.g., creation and update of a policy), ML model management services, and/or enrichment information services. Services performed via the A1 interface are referred to herein as "A1 services." An O1 interface may include an interface that connects SMO 112 with O-RAN managed elements, such as near-RT RIC 124 and/or RAN nodes (e.g., O-RAN centralized unit (O-CU), O-RAN distributed unit (O-DU)). Non-RT RIC 122 may perform services via the O1 interface, such as configuration management services and performance management services of O-RAN managed elements (e.g., operation and maintenance (OAM) services), fault supervision, file management, heartbeat, trace, physical network function (PNF) discovery, software management, etc.). Services performed via the O1 interface are referred to herein as "O1 services." An O2 interface may include an interface that connects SMO 112 to resources of the ORAN O-Cloud. The O-Cloud may comprise of one or more physical infrastructure nodes that host O-RAN functions (e.g., virtual network functions), the supporting software components, and the appropriate management and orchestration functions. Non-RT RIC 122 may also perform other functions and services, such as service management and exposure (SME) services (e.g., registration of a service, update of a service registration), data management and exposure (DME) services, AI/ML services, or the like.

An E2 interface may include an interface that connects near-RT RIC 124 to RAN nodes. Near-RT RIC 124 may control and/or manage (e.g., configure) functionalities of the RAN nodes via the E2 interface.

Application scaling manager 121 may manage scaling of applications, such as applications 123 and/or applications 125. For example, application scaling manager 121 may monitor operation of applications 123 and/or 125 and may determine that operation of a first instance of an application satisfies one or more criteria for scaling the application, the first instance of the application processing cluster messages generate by the RAN 109. The one or more criteria may include a threshold, such as a compute resource usage threshold, a number of cells or base stations managed by the first instance, a number or rate of messages sent from the RIC and handled by the first instance, a request or query from the first instance, an indication from the first instance of one or more virtual clusters, or other criteria. The criteria may be user configurable. The criteria may be specified in a policy. The criteria may be application specific, e.g., for different r/xApps.

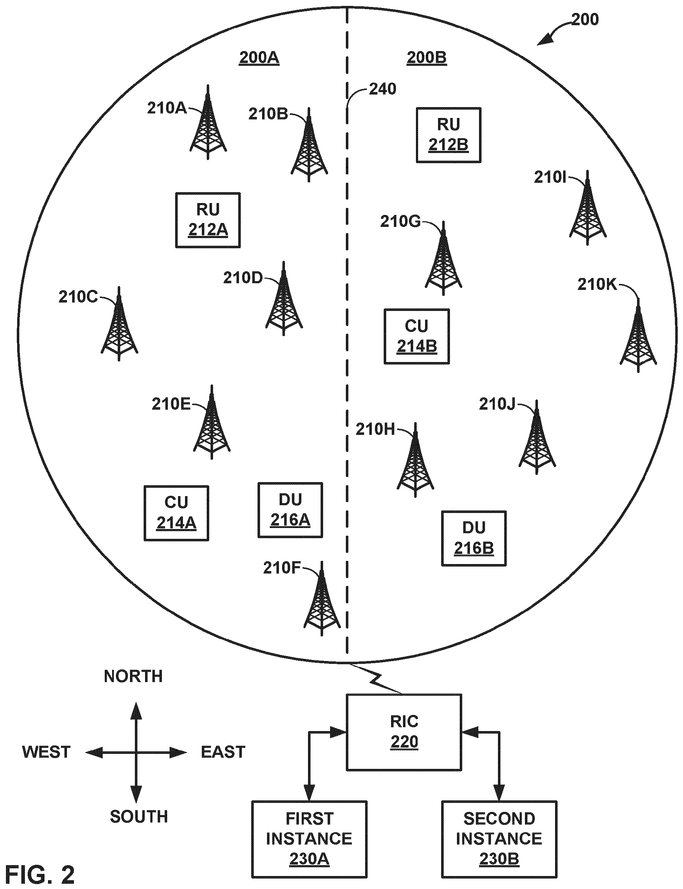

In the following example, the criteria include a compute resource usage of an instance of an application satisfying (e.g., meeting or exceeding) a threshold. In response to determining that the compute resource usage of the first instance of the application (e.g., rApp 123A or xApp 125A) exceeds one or more thresholds, application scaling manager 121 may determine a first virtual cluster and a second virtual cluster of the cluster. An example cluster, first virtual cluster, and second virtual cluster are described later herein with respect to FIG. 2. The first virtual cluster includes first one or more resources of the cluster and the second virtual cluster includes second one or more resources of the cluster that are different than each other. For example, the E2 nodes of the two virtual clusters are different (e.g., each E2 node of the first virtual cluster is not part of the second virtual cluster, and each E2 node of the second virtual cluster is not part of the first virtual cluster). Application scaling manager 121 may instantiate a second instance of the application. Application scaling manager 121 may route cluster messages from the second one or more resources of the second virtual cluster to the second instance of the application. For example, application scaling manager 121 may configure one or more microservices to route cluster messages from the second one or more resources of the second virtual cluster to the second instance of the application. Such configuring effectively splits the cluster for the purposes of the first instance of the application, which continues to receive cluster messages from, and interacts with, the first virtual cluster, and the second instance of the application, which now receives cluster messages from, and interacts with, the second virtual cluster. In this manner, application scaling manager 121 prevents the first instance of the application from becoming overloaded and thereby prevent or diminish the chances of a network disruption of RAN 109 and/or the diminishment of the quality of communications over RAN 109.

FIG. 1B is a block diagram illustrating further example details of the non-RT RIC 122 of FIG. 1A. In the example illustrated in FIG. 1B, SMO 112 may include non-RT RIC 122, one or more AI/ML models 142, one or more functions 144 (e.g., NSSMF, NFMF, and other functions), and open interfaces, such as O1 termination 168 and O2 termination 169. SMO 112 may manage non-RT RIC 122, near-RT RIC 124, O-RAN managed elements (e.g., centralized unit (O-CU) 146, O-RAN decentralized unit (O-DU) 148 of one or more base stations), and resources in O-RAN cloud 150. In the example of FIG. 1B, non-RT RIC includes application scaling manager 121.

Non-RT RIC 122 may provide non-real-time (e.g., greater than one second) control and optimization of RAN elements and resources such as RUs, DUs, and CUs, workflow management, and policy-based control of applications and features of near-RT RIC 124. Non-RT RIC 122 may be deployed as a highly scalable, microservices based containerized architecture. In this example, non-RT RIC 122 may onboard, deploy, and/or terminate one or more applications, e.g., rApp 123A through rApp 123N (collectively "applications 123"). Applications 123 may represent applications that leverage the functionality exposed via the framework of non-RT RIC 122. Applications 123 may provide non-RT RIC 122 with non-real time (e.g., greater than one second) control of RAN elements and their resources. Applications 123 may provide services for radio resource management, higher layer procedure optimization, policy optimization, and providing guidance, parameters, policies, and AI/ML models to support the operation of RAN functions.

For example, applications 123 may provide A1 services that provide and facilitate RAN operations and optimization of near-RT RIC 124, such as providing operational guidance (e.g., policies), enrichment information (e.g., forecasts), and AI/ML services. A1 services may include policy management services such as creating, updating, and/or deleting of A1 policies; receiving policy feedback; querying policy types, identifiers, and status; defining which policy types are supported by near-RT RIC 124; and registering applications (xApps) of near-RT RIC 124 to specific policy types. A1 services may include enrichment information services, such as providing data for model training of AI/ML models, such as forecasts and/or data analytics.

Applications 123 may provide O1 services that provide configuration management or performance management of O-RAN managed entities, such as near-RT RIC 124 and/or RAN nodes, e.g., O-CU 146, O-DU 148 (also referred to herein as "E2 nodes"). O1 services may provide configuration management services to create, update, and/or delete configurations to O-RAN managed entities. For example, configuration management services may include provisioning operations (e.g., for NSS and NF provisioning) to create a managed object instance (MOI), obtain MOI attributes, modify MOI attributes, and/or delete the MOI. O1 services may also provide performance management services that monitor the status of elements or components in the O-RAN managed entities. For example, non-RT RIC 122 may create, modify, or delete performance management jobs to receive performance metrics, or send heartbeat messages to monitor the status and/or availability of services of RAN nodes or to send trace messages to monitor link failures. O1 services may also provide file management, such as to push files to the RAN nodes (e.g., software updates, beamforming configuration files, ML models, security certificates, etc.).

Applications 123 may provide O2 services that provide infrastructure management and/or network function deployment of resources in O-RAN cloud 150 (also referred to herein as "O-Cloud 150"). O2 services may provide discovery and administration of O-Cloud resources; Scale-In, Scale-Out of cloud/deployments (e.g., deploying resources with more or less processors); FCAPS of cloud/deployments, software management of cloud platform/deployments; create/delete deployment and associated allocated O-Cloud resources.

Applications 123 may provide service management and exposure (SME) services, data management and exposure (DME) services, and/or other services. SME services may provide services that enable services provided over an internal interface (R1 interface 154) of non-RT RIC 122 and their exposure and extensibility through services including bootstrap, service registration/deregistration or updates to service registration, service discovery or notification, heartbeat, authentication, authorization, etc. Data management and exposure (DME) services may include services that manage data and their exposure between applications 123. For example, applications 123 may have different functions, such as application 123A configured to collect and analyze data, application 123B configured to generate an ML model based on the results of the analysis, and application 123N configured to make a prediction or inference using the ML model and/or to generate controls for RAN nodes based on the prediction or inference. DME services may manage the data shared between applications 123, such as the collection of data, the processing of the data, and/or the advertisement of the data.

Non-RT RIC 122 may include one or more managers to process the A1, O1, O2, SME, DME services, and other services. For example, non-RT RIC 122 may include a policy manager 158, O1 services manager 160, O2 services manager 162, service manager 163, and data manager 155. Non-RT RIC 122 may include other managers, such as an application manager and an application on-boarder, that are configured to manage the installation and deployment of applications 123.

Policy manager 158 is configured to control the deployment of policies (e.g., A1 services). For example, in response to receiving requests for A1 services from applications 123 via R1 interface 154, R1 interface 154 sends the requests to policy manager 158 via message bus 151. Policy manager 158 may process the A1 services and may send the A1 services to A1 termination 156 via message bus 151, which provides the A1 services to near-RT RIC 124 via A1 interface 164. In some examples, the A1 interface may implement an A1AP application protocol based on the O-RAN specifications.

O1 services manager 160 is configured to control the deployment of O1 services for monitoring the performance of near-RT RIC 124 and/or RAN nodes (e.g., O-CU 146, O-DU 148). For example, in response to receiving requests for O1 services for monitoring the performance of near-RT RIC 124 from applications 123 via R1 interface 154, R1 interface 154 sends the requests to O1 services manager 160 via message bus 151. O1 services manager 160 may process the O1 services and may send the O1 services to O1 termination 168, which provides the O1 services to near-RT RIC 124 via O1 interface 166. In some examples, the O1 interface may implement REST/HTTPS APIs and/or NETCONF.

O1 services manager 160 is additionally, or alternatively, configured to control the deployment of O1 services for the configuration of near-RT RIC 124 and/or RAN nodes. For example, in response to receiving requests for O1 services for the configuration of near-RT RIC 124 from applications 123 via R1 interface 154, R1 interface 154 sends the requests to O1 services manager 160. O1 services manager 160 may process the O1 services and may send the O1 services to O1 termination 168, which provides the O1 services to near-RT RIC 124 via O1 interface 166.

O2 services manager 162 may be configured to control the deployment of O2 services for monitoring the performance of resources of O-RAN Cloud 150 (which may also be referred to herein as "O-Cloud 150). For example, in response to receiving requests for O2 services for monitoring the performance of resources within O-Cloud 150 via R1 interface 154, R1 interface 154 sends the request to O2 services manager 162. O2 services manager 162 may process the O2 services and may send the O2 services to O2 termination 169, which provides the O2 services to resources of O-Cloud 150 via O2 interface 167.

O2 services manager 162 may additionally, or alternatively, be configured to control the deployment of O2 services for the configuration of resources of O-Cloud 150. For example, in response to receiving requests for O2 services for configuring resources within O-Cloud 150 from applications 123 via R1 interface 154, R1 interface 154 sends the requests to O2 services manager 162. O2 services manager 162 may process the O2 services and may send the O2 services to O2 termination 169, which provides the O2 services to resources of O-Cloud 150 via O2 interface 167.

In some examples, R1 interface 154 also exposes applications 123 to SME services, DME services, and/or other services. For example, in response to receiving requests for SME services from applications 123 via R1 interface 154, R1 interface 154 sends the requests to service manager 163. Service manager 163 may process the SME services (e.g., register/update a service) and may send the SME services to R1 termination 152, which provides the SME services to applications 123 via R1 interface 154 (e.g., sending response to application regarding service registration, update, or discovery). Similarly, in response to receiving requests for DME services from applications 123 via R1 interface 154, R1 interface 154 sends the requests to data manager 155. Data manager 155 may process the DME services and may send the DME services to R1 termination 152, which provides the DME services to applications 123 via R1 interface 154 (e.g., sending data from application configured as a data producer to application configured as a data consumer).

R1 interface 154 may also expose applications 123 to slice subnet management services, such as RAN NSSMF interfaces to retrieve slice service level agreements (SLAs) and slice topologies, and/or slice management, SLA, and slice performance management notifications to applications 123.

Application scaling manager 121 may manage scaling of applications, such as applications 123 and/or applications 125. For example, application scaling manager 121 may monitor operation of applications 123 and/or 125 and may determine that operation of a first instance of an application satisfies one or more criteria for scaling the application, the first instance of the application processing cluster messages generate by the RAN 109. The one or more criteria may include a threshold, such as a compute resource usage threshold, a number of cells or base stations managed by the first instance, a number or rate of messages sent from the RIC and handled by the first instance, a request or query from the first instance, an indication from the first instance of one or more virtual clusters, or other criteria. The criteria may be user configurable. The criteria may be specified in a policy. The criteria may be application specific, e.g., for different r/xApps.

In the following example, the criteria include a compute resource usage of an instance of an application satisfying (e.g., meeting or exceeding) a threshold. In response to determining that the compute resource usage of the first instance of the application (e.g., rApp 123A or xApp 125A) exceeds one or more thresholds, application scaling manager 121 may determine a first virtual cluster and a second virtual cluster of the cluster. An example cluster, first virtual cluster, and second virtual cluster are described later herein with respect to FIG. 2. The first virtual cluster includes first one or more resources of the cluster and the second virtual cluster includes second one or more resources of the cluster that are different than each other. For example, the first one or more resources may not be a part of the second virtual cluster and the second one or more resources may not be a part of the first virtual cluster. Application scaling manager 121 may instantiate a second instance of the application. Application scaling manager 121 may route cluster messages from the second one or more resources of the second virtual cluster to the second instance of the application.

For example, application scaling manager 121 may configure one or more microservices to route cluster messages from the second one or more resources of the second virtual cluster to the second instance of the application. For example, application scaling manager 121 may configure one or more microservices of O1 services manager, O2 services manager, O1 termination 168, O2 termination 169, A1 termination 156, and/or R1 termination 152 to route cluster messages from the second one or more resources of the second virtual cluster to the second instance of the application. For example, O1 messages may include cell information identifying a RAN resource associated with the O1 message. A1 messages may include cell or group of cells information identifying RAN resources associated with the A1 message. By configuring microservices of O1 termination 168 and/or A1 termination 156, application scaling manager 121 may affect the routing of cluster messages from the second one or more resources of the second virtual cluster to the second instance of the application. For example, microservices of O1 termination 168 and/or A1 termination 156 may route cluster messages from the second one or more resources of the second virtual cluster to the second instance of the application based on the information within those cluster messages identifying the second one or more resources.

FIG. 1C is a block diagram illustrating further example details of the near-RT RIC of FIG. 1A. In the example illustrated in FIG. 1C, near-RT RIC 124 includes shared data layer 188, database 189, one or more AI/ML models 190, managers 191, xApp subscription manager 192, messaging infrastructure 193, application scaling manager 194, security 195, xApp repository 196, message bus 187, API enablement 197, and open interfaces, such as O1 termination 185, A1 termination 186, Y1 termination 198, and E2 termination 199.

Near-RT RIC 124 can provide near-real-time (e.g., milliseconds) control and optimization of RAN elements and resources, such as O-CU 146 and/or O-DU 148, via fine-grained data collection and actions performed via E2 termination199. For example, near-RT RIC 124 may onboard one or more applications 125 (e.g., xApps 125A-125N of FIG. 1C, collectively, "xApps 125") that provide near-real time control of RAN elements and their resources.

Near-RT RIC 124 may be deployed as a highly scalable, microservices based containerized architecture. Near-RT RIC 124 may onboard one or more applications, e.g., applications 125 (e.g., xApps 125) that manage near-real time events within near-RT RIC 124. Applications 125 may leverage the functionality exposed via the near-RT RIC framework of near-RT RIC 124. Near-RT RIC 124 may enforce policies received from applications 123 of non-RT RIC 122 and may provide policy feedback to non-RT RIC 122. Although illustrated as within near-RT RIC 124, any one or more of applications 125 may be executed by a third party, separate from near-RT RIC 124.

Shared Data Layer 188 and database 189 enable near-RT RIC 124 to maintain and expose RAN/UE information and other information required to support specific use cases. In some examples, database 189 maintains a list of UEs and associated data, and perform tracking and correlation of the UE identities associated with the connected E2 Nodes. In some examples, database 189 maintains configurations and near real-time information relating to connected E2 Nodes and the mappings between them. In some examples, Shared Data Layer 188 and database 189. Such information may be generated and accessed by near-RT RIC 124 or authorized xApps 125. Shared Data Layer 188 provides SDL services for xApps 125, which can be used to subscribe to database notifications and to read, write and modify information stored on database 189. Use-case specific information may be exposed using the services provided by Shared Data Layer 188.

Managers 191 include OAM management, which provides fault, configuration, accounting, performance, file, security and other management plane services. Managers 191 of near-RT RIC 124 provide several capabilities to support OAM management services. For example, managers 191 provide fault management, including Near-RT RIC Fault Supervision MnS over the O1 interface. Further, managers 191 provide configuration management, including Near-RT RIC Provisioning MnS over the O1 interface.

In some examples, managers 191 perform logging, tracing, and metrics collection functions. Logging is to capture information needed to operate, troubleshoot and report on the performance of near-RT RIC 124 and its constituent components. Log records may be viewed and consumed directly by users and systems, indexed and loaded into a data storage, and used to compute metrics and generate reports. Near-RT RIC components log events according to a common logging format. Different logs can be generated (e.g., audit log, metrics log, error log and debug log). Tracing mechanisms are used to monitor the transactions or a workflow. An example subscription workflow can be broken into two traces namely, a subscription request trace followed by a response trace. Individual traces can be analyzed to understand timing latencies as the workflow traverses a particular Near-RT RIC component. Metrics are collected and reported for performance and fault management specific to each xApp logic and other internal functionalities are collected and published for authorized consumer (e.g., SMO).

Near-RT RIC 124 includes xApp subscription manager 192. xApp subscription manager 192 enables near-RT RIC 124 to handle subscription requests from different xApps 125 for, e.g., E2-related data, and provides unified data distribution to xApps 125 for those data. xApp subscription manager 192, in some examples, manages subscriptions from xApps to E2 nodes. xApp subscription manager 192 may enforce authorization of policies controlling xApp 125 access to messages. Further, xApp subscription manager 192 enables merging of identical subscriptions from different xApps 125 into a single subscription toward an E2 Node.

Messaging infrastructure 193 enables near-RT RIC 124 with low-latency message delivery between Near-RT RIC internal endpoints. Messaging infrastructure 193 supports registration of endpoints, wherein endpoints register themselves to messaging infrastructure 193. Messaging infrastructure 193 further supports discovery of endpoints, wherein endpoints are discovered by messaging infrastructure 193 initially and registered to messaging infrastructure 193. Messaging infrastructure 193 also supports deletion of endpoints, wherein endpoints are deleted once they are not used anymore. Messaging infrastructure 193 may provide an API for sending messages to messaging infrastructure 193 and an API for receiving messages from messaging infrastructure 193. Messaging infrastructure 193 supports multiple messaging modes, e.g., point-to-point mode (e.g., message exchange among endpoints), publish/subscribe mode (e.g., real-time data dispatching from E2 termination 199 to multiple subscriber xApps 125). Messaging infrastructure 193 provides message routing, namely according to the message routing information, messages can be dispatched to different endpoints. Messaging infrastructure 193 supports message robustness to avoid data loss during a messaging infrastructure outage/restart or to release resources from the messaging infrastructure once a message is outdated.

Near-RT RIC 124 includes security 195. Security 195 prevent malicious xApps 125 from abusing radio network information (e.g., exporting to unauthorized external systems) and/or control capabilities over RAN functions.

Near-RT RIC 124 may communicate with E2 nodes via E2 interface 165. Near-RT RIC 124 includes termination for various interfaces, including E2 termination 199, A1 termination 186, O1 termination 185, and Y1 termination 198. E2 termination 199 enables termination of an E2 interface. E2 termination 199 may terminate an SCTP connection from each E2 Node. E2 termination 199 may also route messages from xApps 125 through the SCTP connection to an E2 Node. E2 termination 199 may further decode the payload of an incoming ASN.1 message enough to determine message type. In some examples, E2 termination 199 handles incoming E2 messages related to E2 connectivity and receives and responds to an E2 Setup Request from an E2 Node. Furthermore, E2 termination 199 may notify xApps 125 of a list of RAN functions supported by an E2 Node based on information derived from the E2 Setup and RIC Service Update procedures, and may notify the newly connected E2 Node of the list of accepted functions.

A1 termination 186 enables termination of the A1 interface. A1 termination 186 provides a generic API by means of which Near-RT RIC 124 can receive and send messages via an A1 interface. These include, e.g., A1 policies and enrichment information received from non-RT RIC 122, or A1 policy feedback sent towards non-RT RIC 122. A1 termination 186 may further send an A1 policy that is set or updated by non-RT RIC 122 to suitable xApp(s) 125 based on a list of candidate xApps 125 provided by xApp repository 196.

O1 termination 185 enables termination of the O1 interface. Near-RT RIC 124 communicates with SMO 112 via O1 interface 166 and exposes O1-related management services from near-RT RIC 124. For O1 management services (MnS), near-RT RIC 124 is an MnS producer and SMO 112 is an MnS consumer. Near-RT RIC 124 exposes provisioning management services from near-RT RIC 124 to an O1 provisioning management service consumer, translates O1 management services to internal APIs of near-RT RIC 124, exposing FM services to report faults and events from near-RT RIC 124 to an O1 FM service consumer, exposes PM services to report bulk and real-time PM data from near-RT RIC 124 to an O1 PM service consumer, exposes file management services to download ML files, software files, etc. and upload log/trace files to/from file MnS consumer, and exposes communication surveillance services to the O1 communication surveillance service consumer.

Y1 termination 198 enables termination of the Y1 interface. Y1 termination 198 provides support for exposing RAN analytics information from near-RT RIC 124 to Y1 consumers.

Near-RT RIC 124 may include one or more managers to process the O1, A1, Y1, and E2 services, and other services. Near-RT RIC 124 may include other managers, such as an application manager and an application on-boarder, that are configured to manage the installation and deployment of applications 125.

API enablement 197 provide APIs for near-RT RIC 124. The near-RT RIC APIs can be categorized based on the interaction with near-RT RIC 124 and can be related to E2-related services, A1-related services, management related services, and SDL services. This functionality provides support for registration, discovery and consumption of near-RT RIC APIs within the near-RT RIC scope. In particular, API enablement 197 provides services including repository and registry services for near-RT RIC APIs, services that allow discovery of the registered near-RT RIC APIs, services to authenticate xApps 125 for use of the near-RT RIC APIs, services that enable generic subscription and event notification, and functionality to avoid compatibility clashes between xApps 125 and the services they access. In some examples, API enablement 197 provides API enablement services that are accessed by xApps 125 via one or more enablement APIs.

AI/ML models 190 enables near-RT RIC 124 with data pipelining, model management, training and inference, which constitute complete AI/ML workflow support for xApps 125 to implement AI/ML algorithms. xApps 125 may use none, part, or all of this functionality, depending on its design. In some examples, AI/ML models 190 include data pipelining, which performs data ingestion and preparation for xApps 125. AI/ML models 190 may provide generic and use case-independent capabilities to AI/ML-based xApps 125 that may be useful to multiple use cases. The input data for training may come from an xApp-specific space (e.g., dedicated space in database).

xApp repository 196 maintaining a list of candidate xApp(s) to A1 termination 186 for sending A1 policy or policy update to suitable xApp(s) 125 based on policy type and operator policies. In addition, xApp repository 196 maintains the policy types supported in near-RT RIC 124. The supported policy types are based on policy types supported by the registered xApps 125 and operator policies. Further, xApp repository 196 performs xApp access control to requested A1-EI type based on operator policies.

Application scaling manager 194 may manage scaling of applications, such as applications 123 (FIGS. 1A-1B) and/or applications 125. For example, application scaling manager 194 may monitor operation of applications 123 and/or 125 and may determine that operation of a first instance of an application satisfies one or more criteria for scaling the application, the first instance of the application processing cluster messages generate by the RAN 109. The one or more criteria may include a threshold, such as a compute resource usage threshold, a number of cells or base stations managed by the first instance, a number or rate of messages sent from the RIC and handled by the first instance, a request or query from the first instance, an indication from the first instance of one or more virtual clusters, or other criteria. The criteria may be user configurable. The criteria may be specified in a policy. The criteria may be application specific, e.g., for different r/xApps.

In the following example, the criteria include a compute resource usage of an instance of an application satisfying (e.g., meeting or exceeding) a threshold. In response to determining that the compute resource usage of the first instance of the application (e.g., rApp 123A or xApp 125A) exceeds one or more thresholds, application scaling manager 194 may determine a first virtual cluster and a second virtual cluster of the cluster. An example cluster, first virtual cluster, and second virtual cluster are described later herein with respect to FIG. 2. The first virtual cluster includes first one or more resources of the cluster and the second virtual cluster includes second one or more resources of the cluster that are different than each other. For example, the E2 nodes of the two virtual clusters are different. Application scaling manager 194 may instantiate a second instance of the application. Application scaling manager 194 may route cluster messages from the second one or more resources of the second virtual cluster to the second instance of the application.

For example, application scaling manager 194 may configure one or more microservices to route cluster messages from the second one or more resources of the second virtual cluster to the second instance of the application. For example, application scaling manager 194 may configure one or more microservices of O1 termination 185, A1 termination 186, and/or E2 termination 199 to route cluster messages from the second one or more resources of the second virtual cluster to the second instance of the application. For example, O1 messages may include cell information identifying a RAN resource associated with the O1 message. A1 messages may include cell or group of cells information identifying RAN resources associated with the A1 message. E2 termination 199 may include a table that maps each cell or RAN resource to a particular instance of an application, for example, through the use of a Stream Control Transmission Protocol (SCTP) port. By configuring microservices of O1 termination 185, A1 termination 186, and/or E2 termination 199, application scaling manager 194 may affect the routing of cluster messages from the second one or more resources of the second virtual cluster to the second instance of the application. For example, microservices of O1 termination 185 and/or A1 termination 186 may route cluster messages from the second one or more resources of the second virtual cluster to the second instance of the application based on the information within those cluster messages identifying the second one or more resources. For example, microservices of E2 termination 199 may alter the table to map the second one or more resources of the second virtual cluster to the second instance of the application.

FIG. 2 is a conceptual diagram illustrating an example cluster and two virtual clusters according to one or more aspects of this disclosure. Cluster 200 may be a cluster of network elements managed or controlled by non-RT RIC 122 and/or near-RT RIC 124. For example, RAN 109 may be divided into a plurality of clusters for management purposes as the number of elements and UEs in RAN 109 may be greater than a single non-RT RIC and/or near-RT RIC may be able to manage. Cluster 200 may be an example of one of the plurality of clusters. Cluster 200 may send and/or receive cluster messages to/from RIC 220. RIC 220 may be an example of non-RT RIC 122 and/or near-RT RIC 124 of FIGS. 1A-1C. RIC 220 may route cluster messages to/from first instance 230A and/or second instance 230B. First instance 230A and second instance 230B may represent example instances of any of applications 123 and/or 125.

For example, cluster 200 may include geographically neighboring elements, such as cell towers 210A-210K, RU 212A-RU 212B, CU214A-CU214B, and/or DU 216A-DU216B. It should be noted that a cluster may include any number of elements of any type. In some examples, RIC 220 may determine to split cluster 200 into a plurality (e.g., two) of virtual clusters for a particular application (e.g., an application of which first instance 230A and second instance 230B are instances), such as an rApp or an xApp, when one or more criteria for scaling the application are satisfied. While two virtual clusters 200A and 200B are shown in the example of FIG. 2, it should be understood that RIC 220 may split cluster 200 into two virtual clusters or more than two virtual clusters.

In an example, a criteria for scaling the application may be satisfied when the compute usage of the rApp or xApp becomes too great. For example, RIC 220 may monitor the compute usage of the application over time. The compute usage may include CPU utilization (such as MIPS or percentage of CPU utilization by the application), memory utilization (such as gigabits or terabits used or a percentage of system memory used), network utilization (such as bandwidth or percentage of available bandwidth used), and/or the like. RIC 220 may compare the compute utilization of the application to one or more thresholds. Based on the compute utilization of the application meeting or exceeding one or more of the one or more thresholds, RIC 220 may determine that the application is a candidate for a new instance. In some examples, there may be a threshold for each modality of compute usage monitored by RIC 220. For example, there may be a first threshold for CPU utilization, a second threshold for memory utilization, and a third threshold for network utilization. In one example, RIC 220 may determine the application is a candidate for a new instance based on determining that one of the thresholds is exceeded (or met or exceeded). In another example, RIC 220 may determine the application is a candidate for a new instance based on more than on threshold being exceeded (or met or exceeded). In some examples, the one or more thresholds are programmable. If RIC 220 does determine that an application is a candidate for a new instance, RIC 220 may instantiate a new instance of the application. For example, prior to instantiating second instance 230B, RIC 220 may determine that operation of first instance 230A satisfies one or more criteria for scaling an application and, in response to this determination, instantiate second instance 230B.

While instantiating a new instance of an application (e.g., second instance 230B) for cluster 200 may be beneficial and avoid overloading an existing instance of the application (e.g., first instance 230A), doing so and dividing the tasks between the existing instance and the new instance may result in inefficiencies if performed, for example, in real-time. As such, RIC 220 may determine to split cluster 200 into first virtual cluster 200A and second virtual cluster 200B for the application. While RIC 220 may split cluster 200 into first virtual cluster 200A and second virtual cluster 200B for the application, cluster 200 may remain as a single cluster or not be split into first virtual cluster 200A and second virtual cluster 200B for other applications.

If in the future, another application, such as a second application of applications 123 or application 125, exceeds one or more of the one or more compute usage thresholds, RIC 220 may determine to split cluster 200 into a plurality of virtual clusters for that application. In some examples, the split may be the same as for the first application (e.g., virtual cluster 200A and virtual cluster 200B). In other examples, the split may be different for the second application than for the first application.

For the first application (e.g., represented by first instance 230A and second instance 230B), RIC 220 may determine to split cluster 200 into virtual cluster 200A and virtual cluster 200B along geographic boundary 240, such that elements of cluster 200 that are west of geographic boundary 240 are part of virtual cluster 200A and elements of cluster 200 that are east of geographic boundary 240 are part of virtual cluster 200B. Geographic boundary 240 is merely an example and may be any geographic boundary or boundaries that splits cluster 200 into a plurality of virtual clusters. RIC determines geographic boundary 240 such that elements within virtual cluster 200A are geographically contiguous and elements within virtual cluster 200B are geographically contiguous. In other words, virtual cluster 200A includes a neighborhood of geographically neighboring elements and virtual cluster 200B includes a separate neighborhood of geographically neighboring elements. It should be noted that geographically contiguous as used herein does not require the elements themselves to physically be in contact with each other, rather it is intended to mean that there are not geographically intervening elements of a different virtual cluster between geographically neighboring elements.

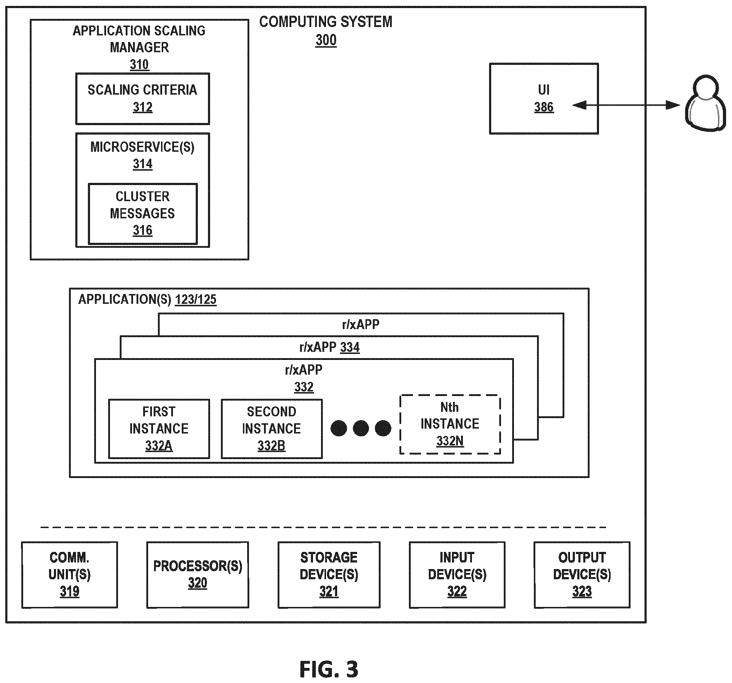

FIG. 3 is a diagram illustrating an example computing system in accordance with techniques of this disclosure. In the example of FIG. 3, computing system 300 may implement non-RT RIC 122, near-RT RIC 124 of FIG. 1, and/or RIC 220 of FIG. 2. First instance 332A may be an example of first instance 230A, second instance 332B may be an example of second instance 230B, and application scaling manager 310 may be an example of application scaling manager 121 of FIGS. 1A and 1B and/or of application scaling manager 194 of FIG. 1C.

Computing system 300 includes one or more processors 320, one or more input devices 322, one or more output devices 323, one or more communication units 319, and one or more storage devices 321. In some examples, computing system 300 is a cloud computing system, server farm, and/or server cluster (or portion thereof) that provides services to client devices and other devices or systems. In other examples, computing system 300 may be implemented through one or more virtualized compute instances (e.g., virtual machines, containers) of a data center, cloud computing system, server farm, and/or server cluster.

One or more of the devices, modules, storage areas, or other components of computing system 300 may be interconnected to enable inter-component communications (physically, communicatively, and/or operatively). In some examples, such connectivity may be provided by communication channels, a system bus, a network connection, an inter-process communication data structure, or any other method for communicating data.

One or more processors 320 of computing system 300 may implement functionality and/or execute instructions associated with application scaling as described herein. One or more processors 320 may be, may be part of, and/or may include processing circuitry that performs operations in accordance with one or more aspects of the present disclosure. Examples of processors 320 include microprocessors, application processors, display controllers, auxiliary processors, one or more sensor hubs, and any other hardware configured to function as a processor, a processing unit, or a processing device. Computing system 300 may use one or more processors 320 to perform operations in accordance with one or more aspects of the present disclosure using software, hardware, firmware, or a mixture of hardware, software, and firmware residing in and/or executing at computing system 300. In some examples, any one or more of applications 123/125 may be hosted by a cloud provider or other third-party.

One or more communication units 319 of computing system 300 may communicate with devices external to computing system 300 by transmitting and/or receiving data, and may operate, in some respects, as both an input device and an output device. In some examples, communication units 319 may communicate with other devices over a network. In other examples, communication units 319 may send and/or receive radio signals on a radio network such as a cellular radio network. In other examples, communication units 319 of computing system 300 may transmit and/or receive satellite signals on a satellite network such as a Global Positioning System (GPS) network. Examples of communication units 319 include a network interface card (e.g., an Ethernet card), an optical transceiver, a radio frequency transceiver, a GPS receiver, or any other type of device that can send and/or receive information. Other examples of communication units 319 may include devices capable of communicating over Bluetooth^{®}, GPS, NFC, ZigBee, and cellular networks (e.g., 3G, 4G, 5G), and Wi-Fi^{®} radios found in mobile devices as well as Universal Serial Bus (USB) controllers and the like. Such communications may adhere to, implement, or abide by appropriate protocols, including Transmission Control Protocol/Internet Protocol (TCP/IP), Ethernet, Bluetooth, NFC, or other technologies or protocols.

One or more input devices 322 may represent any input devices of computing system 300 not otherwise separately described herein. One or more input devices 322 may generate, receive, and/or process input from any type of device capable of detecting input from a human or machine. For example, one or more input devices 322 may generate, receive, and/or process input in the form of electrical, physical, audio, image, and/or visual input (e.g., peripheral device, keyboard, microphone, camera).

One or more output devices 323 may represent any output devices of computing system 300 not otherwise separately described herein. One or more output devices 323 may generate, receive, and/or process input from any type of device capable of detecting input from a human or machine. For example, one or more output devices 323 may generate, receive, and/or process output in the form of electrical and/or physical output (e.g., peripheral device, actuator).

One or more storage devices 321 within computing system 300 may store information for processing during operation of computing system 300. Storage devices 321 may store program instructions and/or data associated with one or more of the modules described in accordance with one or more aspects of this disclosure. One or more processors 320 and one or more storage devices 321 may provide an operating environment or platform for such modules, which may be implemented as software, but may in some examples include any combination of hardware, firmware, and software. One or more processors 320 may execute instructions and one or more storage devices 321 may store instructions and/or data of one or more modules. The combination of processors 320 and storage devices 321 may retrieve, store, and/or execute the instructions and/or data of one or more applications, modules, or software. Processors 320 and/or storage devices 321 may also be operably coupled to one or more other software and/or hardware components, including, but not limited to, one or more of the components of computing system 300 and/or one or more devices or systems illustrated as being connected to computing system 300.

In some examples, one or more storage devices 321 are temporary memories, meaning that a primary purpose of the one or more storage devices is not long-term storage. Storage devices 321 of computing system 300 may be configured for short-term storage of information as volatile memory and therefore not retain stored contents if deactivated. Examples of volatile memories include random access memories (RAM), dynamic random-access memories (DRAM), static random-access memories (SRAM), and other forms of volatile memories known in the art. Storage devices 321, in some examples, also include one or more computer-readable storage media. Storage devices 321 may be configured to store larger amounts of information than volatile memory. Storage devices 321 may further be configured for long-term storage of information as non-volatile memory space and retain information after activate/off cycles. Examples of non-volatile memories include magnetic hard disks, optical discs, Flash memories, or forms of electrically programmable memories (EPROM) or electrically erasable and programmable (EEPROM) memories.

Computing system 300 may include one or more modules or units configured to perform one or more services or functions of applications 123/125 or any of the functions of non-RT RIC 122 or near-RT RIC 124, as described above and shown with respect to FIGS. 1A-1C.

Computing system 300 may include application scaling manager 310. Application scaling manager 310 may be configured to perform the application scaling techniques described herein. For example, computing system 300 may provide scaling management via application scaling manager 310 for the applications 123/125, such as r/xApp 332, which in some examples represents an rApp, and in other examples represents an xApp. For example, when computing system 300 represents non-RT RIC 122, computing system 300 via application scaling manager 310 may provide scaling management for rApps such as applications 123 of FIGS. 1A and 1B. In the example when computing system 300 represents near-RT RIC 124, computing system 300 via application scaling manager 310 may provide scaling management for xApps such as applications 125 of FIGS. 1A and 1C. Although shown as executing on the same computing system 300 as application scaling manager 310, r/xApps 332, 334 may execute on different computing systems.

Application scaling manager 310 may include one or more scaling criteria 312 with which application scaling manager 310 may determine whether or not to scale a given application or the instance of the application. For example, when one or more scaling criteria 312 include compute resource threshold(s), application scaling manager 310 may compare compute resource usage of an instance of an application to the compute resource threshold(s) of one or more scaling criteria 312 to determine whether or not to scale the given application or the instance of the application. Application scaling manager 310 may also implement microservices 314 for routing cluster messages 316 to an appropriate virtual cluster or cluster when scaling an instance of an application or an application. In some examples, microservices 314 may include A1, O1, O2, and/or E2 microservices, such as those described above with respect to FIGS. 1A-1C. It should be noted that in some examples, microservices 314 may be implemented outside of application scaling manager 310, such as in one or more other modules or units of computing system 300. In addition, although referred to being performed by microservices, the techniques are applicable to other deployable computing units, such as virtual machines, bare metal processes, or other modules or services.

In some examples, application scaling manager 310 may determine or characterize the compute resource usage of an instance of an application as more cells are added to and/or deleted from a cluster or a virtual cluster. Computing system 300 may keep track of a network inventory of network elements, such as the elements of RAN 109, using, for example, optional information like dynamic neighbor discovery (via automatic neighbor relation (ANR)) and base station GPS coordinates from provisioning data. As such, computing system 300 may have the information regarding the geographic layout of the elements of RAN 109, and may thus split RAN 109 into clusters or split clusters (like cluster 200) into virtual clusters in a manner that maintains geographic continuity for the clusters or virtual clusters. Computing system 300 may store this network inventory in memory, such as storage device(s) 321.

As application scaling manager 310 determines to scale up a particular application, application scaling manager 310 may split the network into virtual clusters, using the information from the network inventory, for example, to keep the virtual clusters geographically contiguous (e.g., the resources or elements of a given virtual cluster neighboring). In some examples, the information used to determine the split may be learned via an artificial intelligence model or machine learning model (e.g., of AI/ML models 142 of FIG. 1B and/or AI/ML models 190 of FIG. 1C) over time or may be entered manually by an operator to align such splitting with the operator's network planning.

For example, to scale up an application, application scaling manager 310 may automatically instantiate a new instance of the application. Any operation to cause a new instance of the application is considered instantiating the new instance of the application. For example, application scaling manager 310 may load and execute a new instance on a compute node, request that an existing instance of the application scale up to create a new instance of the application, receive a request to scale from an existing instance of the application, and/or perform another operation to instantiate the new instance of the application. Application scaling manager 310 may assign a particular virtual cluster to that new instance of the application. The RIC platform may then start routing incoming and outgoing A1/O1/O2/E2 messages from elements or resources (e.g., the set of cells) in that virtual cluster to the newly launched application instance.

For example, if a particular cluster includes 200 cells, application scaling manager 310 may add an instance of the application and split the cluster into a first virtual cluster of 100 cells and a second virtual cluster of 100 cells for that application. Thus, when a new instance of an application is instantiated, application scaling manager 310 adjusts the other instance to reduce the usage of that instance by routing incoming and outgoing A1/O1/O2/E2 messages associated with a second virtual cluster to the new instance of the application. Application scaling manager 310 continues to route a remainder of the incoming and outgoing A1/O1/O2/E2 messages associated with the first virtual cluster to the existing instance of the application. Each of the first virtual cluster and the second virtual cluster may be geographically contiguous. In other words, the resources or elements of the first virtual cluster form a first neighborhood and the resources or elements of the second virtual cluster form a second neighborhood where there are no geographically intervening resources of one cluster in the neighborhood of another cluster.

According to the techniques of this disclosure, application scaling manager 310 may determine that operation of a first instance (e.g., r/xApp 332A) of an application satisfies one or more scaling criteria 312 for scaling application 332. First instance (e.g., r/xApp 332A) of the application may process cluster messages generated by RAN 109. In response to determining that the operation of first instance (e.g., r/xApp 332A) of the application satisfies the one or more scaling criteria 312, application scaling manager 310 may determine a first virtual cluster (e.g., first virtual cluster 200A) and a second virtual cluster (e.g., second virtual cluster 200B) of RAN 109. The first virtual cluster (e.g., first virtual cluster 200A) includes first one or more resources of the cluster and the second virtual cluster (e.g., second virtual cluster 200B) includes second one or more resources of the cluster that are different than each other. For example, the E2 nodes of the two virtual clusters are different. Application scaling manager 310 may instantiate a second instance (e.g., r/xApp 332B) of the application. Application scaling manager 310 may route cluster messages (e.g., cluster messages 316) from the second one or more resources of the second virtual cluster to the second instance of the application. For example, computing system 300 may receive cluster messages 316 from both first virtual cluster 200A and second virtual cluster 200B in parallel. Application scaling manager 310 may route cluster messages from virtual cluster 200A to first instance 332A, and cluster messages from virtual cluster 200B to second instance 332B. It should be noted that first instance 332A and second instance 332B may be executing in parallel (e.g., both are executing at a same time after the instantiation of second instance 332B).

It should be understood that application scaling manager 310 may continue to monitor the compute usage of both the first instance of the application and the second instance of the application. If the compute usage of either instance of the application later exceeds the one or more thresholds, application scaling manager 310 may repeat this process, determining further virtual clusters from the first or second virtual cluster, and may instantiate a new instance (e.g., r/xApp 332N) of the application to handle messages from, and interact with, the new virtual cluster. Application scaling manager 310 may continue thereafter, determining new virtual clusters and instantiating new instances of r/xApp 332 as needed to handle messages from, and interact with, any further new virtual clusters.

Application scaling manager 310 may also monitor operation of instances of applications to determine if the application satisfies one or more criteria for scaling the application downward, such as terminating one or more instance of an application. For example, application scaling manager 310 may compare compute usage for instances of application 332 to determine if compute usage falls below (or below or equal to) one or more second thresholds. If compute usage falls below (or below or equal to) one or more second thresholds, application scaling manager 310 may determine to scale down the application by terminating an instance of application 332, tearing down the virtual cluster associated with that instance of the application, and routing messages from that virtual cluster to another instance of the application. In some examples, application scaling manager 310 may take into account compute usage of the other instance of the application prior to taking such actions.

Some r/Apps and/or x/Apps may not be designed with inherent scaling features. Such applications may be referred to herein as non-scalable applications. While such applications may be scalable with external management, such applications may not be capable of determining that there may be a desire or need to scale the application. Other r/Apps and/or x/Apps may be designed with inherent scaling features. Such applications may be referred to herein as scalable applications. Such applications may be capable of determining that there may be a desire or need to scale the application. This disclosure describes techniques that applications scaling manager 310 may employ when managing scaling of non-scalable applications and scalable applications.

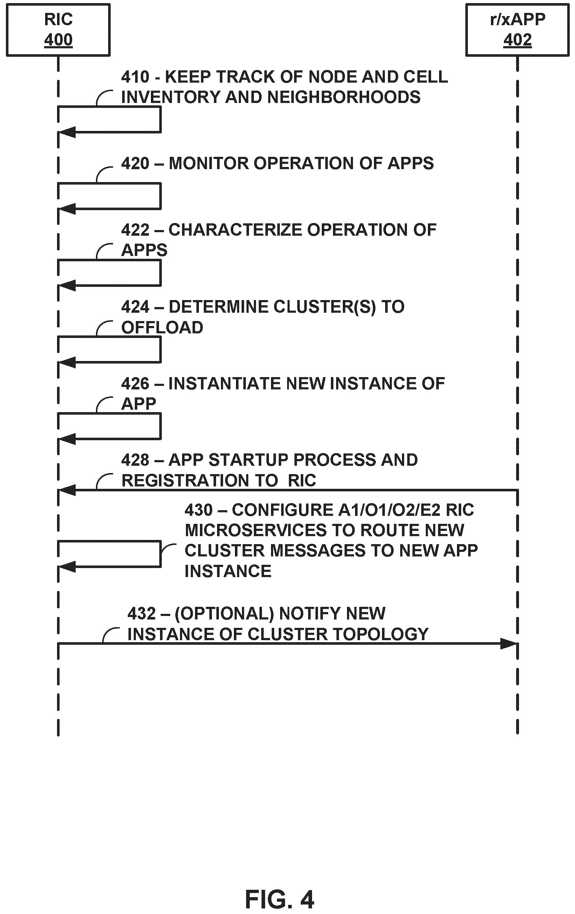

FIG. 4 is a flow diagram of example application scaling techniques for non-scalable applications according to one or more aspects of this disclosure. RIC 400 may be an example of non-RT RIC 122, near-RT RIC 124, and/or computing system 300. r/xApp 402 may be an example of any of applications 123 and/or applications 125. The actions of RIC 400 may be performed by any of, or any combination of, the modules or units described herein, including application scaling manager 310.

RIC 400 may keep track of node and cell inventory and neighborhoods (410). For example, RIC 400 may monitor nodes and cells that may be managed by RIC 400 and may store mappings of nodes and cells into clusters. RIC 400 may store geographic positioning data associated with cells and/or base stations. Such data may be used by RIC 400 to determine neighborhoods or geographically continuous clusters (or virtual versions thereof) of cells and/or base stations within the portion or cluster of RAN 109 managed by RIC 400.

RIC 400 may monitor the operation of instances of applications (420). For example, RIC 400 may monitor operational parameters of each instance of each application to determine when it may be desirable to scale a particular application. Such operational parameters may be indicative of a desire or need to scale an application. In some examples, operational parameters may include CPU usage, memory usage, and/or the like.

RIC 400 may characterize the operation of the instances of the applications (422). For example, RIC 400 may determine whether operation of an instance of an application satisfies one or more scaling criteria 312 for scaling the application. In an example where one or more scaling criteria 312 includes a compute utilization threshold, RIC 400 may compare the compute utilization of each instance of an application, or the application as a whole (e.g., r/xApp 402), to one or more thresholds to determine whether a new instance of an application should be instantiated. In such an example, the one or more thresholds may be variable, based on the overall usage of the compute resources of the platform and/or based on available remaining resources (e.g., currently unused or currently unassigned resources) of the platform (e.g., RIC 400).

RIC 400 may determine one or more clusters to which to perform offloading operations (424). For example, RIC 400 may determine two (or more) virtual clusters based on an existing cluster. For example, RIC 400 may split cluster 200 into two (or more) virtual clusters, assigning a first plurality of neighboring cells and/or base station(s) to first virtual cluster 200A and a second plurality of neighboring cells and/or base station(s) to second virtual cluster 200B.

RIC 400 may instantiate a new instance of the application (426). For example, RIC 400 may instantiate a new instance of r/xApp 402 to reduce resource utilization by an existing instance of r/xApp 402. For example, existing instance of r/xApp 402 may be responsible for handling the cluster that is being split. The new instance of r/xApp 402 may be instantiated to handle second virtual cluster 200B and the existing instance of r/xApp 402 may be relieved of handling second virtual cluster 200B and may, at least for the near term, be responsible for only handling first virtual cluster 200A.

The new instance of r/xApp 402 may begin a startup process and may register with RIC 400 (428). In the example where r/xApp 402 represents an rApp, r/xApp 402 may attempt to obtain a list of cells (and/or other resources) from RIC 400 that the new instance of the rApp is to manage. In such cases, in some examples, RIC 400 may provide such information to the new instance of the application.

RIC 400 may configure A1/O1/O2/E2 RIC microservices to route new cluster messages (e.g., of cluster messages 316) for the first virtual cluster to new instance of r/xApp 402 (430). In this manner, any new messages for second virtual cluster 200B will be routed to/from the new application instance rather than the existing application instance, thus reducing the burden on, and compute resource usage of, the existing application instance.

In some examples, RIC 400 may notify the new instance of r/xApp 402 of the cluster topology of the second virtual cluster (432). This may be desirable when r/xApp 402 is an rApp and attempts to acquire a list of cells for which the new instance is handling.

In some examples, an application may be configured with scalability capabilities (e.g., a scalable application). In such cases, the application may still require certain notifications and information from the RIC platform in order to determine when to scale. For example, the application may use notifications from the RIC platform that there may be an overload (or underload) condition with the application and the application needs to scale up (or down). As such, there may be a need for APIs for applications to query the RIC to determine which virtual cluster a new instance of the application should operate on. There may be a need for APIs for applications to notify and/or register with the RIC platform which virtual cluster the new instance of the application will operate on. There may be a need for APIs for applications to trigger instantiation of a new instance of itself with a particular virtual cluster. This may be needed because in many instances, an application will not have permissions necessary to self-instantiate a new instance within the O-RAN network. For example, APIs may be needed for an application to request or query permission to instantiate a new instance and for the application to receive notifications from the RIC platform of permission to instantiate a new instance of the application.

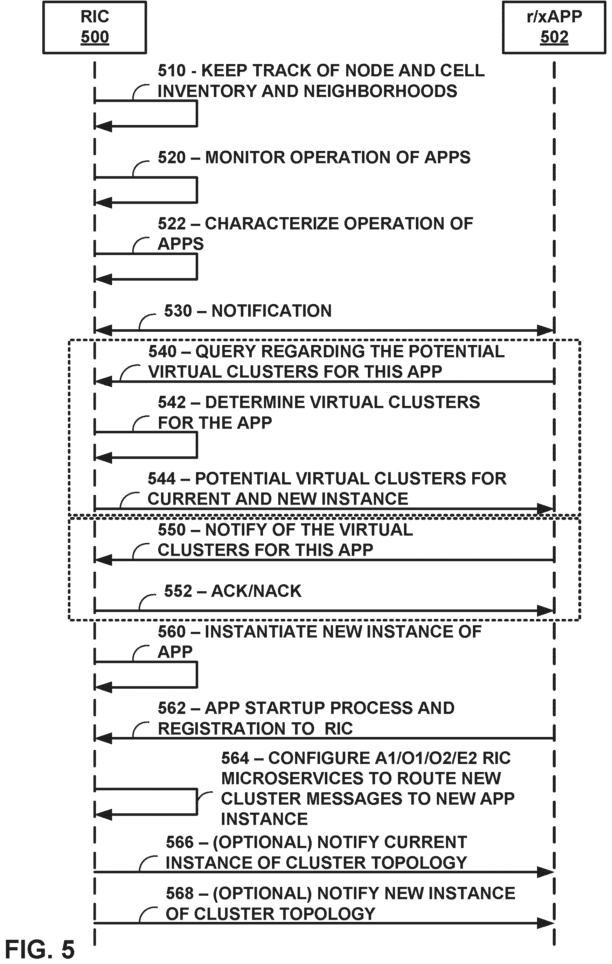

FIG. 5 is a flow diagram of example application scaling techniques for scalable applications according to one or more aspects of this disclosure. RIC 500 may be an example of non-RT RIC 122, near-RT RIC 12, and/or computing system 300. r/xApp 502 may be an example of any of applications 123 and/or applications 125. The actions of RIC 500 may be performed by any of, or any combination of, the modules or units described herein, including application scaling manager 310.

RIC 500 may keep track of node and cell inventory and neighborhoods (510). For example, RIC 500 may monitor nodes and cells that may be managed by RIC 500 and may store mappings of nodes and cells into clusters. RIC 500 may store geographic positioning data associated with cells and/or base stations. Such data may be used by RIC 500 to determine neighborhoods or geographically contiguous clusters (or virtual versions thereof) of cells and/or base stations within the portion or cluster of RAN 109 managed by RIC 500.

RIC 500 may monitor the operation of instances of applications (520). For example, RIC 500 may monitor operational parameters of each instance of each application to determine when it may be desirable to scale a particular application. Such operational parameters may be indicative of a desire or need to scale an application. In some examples, operational parameters may include CPU usage, memory usage, and/or the like.

RIC 500 may characterize the operation of the instances of the applications (522). For example, RIC 500 may determine whether operation of an instance of an application satisfies one or more scaling criteria 312 for scaling the application. In an example where one or more scaling criteria 312 includes a compute utilization threshold, RIC 500 may compare the compute utilization of each instance of an application, or the application as a whole (e.g., r/xApp 502), to one or more thresholds to determine whether a new instance of an application should be instantiated. In such an example, the one or more thresholds may be variable, based on the overall usage of the compute resources of the platform and/or based on available remaining resources (e.g., currently unused or currently unassigned resources) of the platform (e.g., RIC 500).

RIC 500 may determine to instantiate a new instance of r/xApp 502. In such a case, RIC 500 may send a notification to r/xApp 502, such as an application overload notification (530). For example, RIC 500 may inform r/xApp 502 that a new instance of r/xApp 502 is to be instantiated. In some examples, RIC 500 may inform r/xApp 502 whether RIC 500 will determine the virtual clusters or whether r/xApp 502 will determine the virtual clusters. In some examples, RIC 500 and r/xApp 502 may negotiate whether RIC 500 will generate the virtual clusters or whether r/xApp 502 will generate the virtual clusters. In some examples, whether RIC 500 will generate the virtual clusters or whether r/xApp 502 will generate the virtual clusters is predetermined.

In some examples, rather than RIC 500 determining to instantiate a new instance of r/xApp 502, r/xApp 502 itself may determine to instantiate a new instantiate a new instance of r/xApp 502. For example, r/xApp 502 may determine that one or more existing instance of r/xApp 502 are overloaded. In such a case, r/xApp 502 may send a notification to RIC 500, such as an application overload notification. For example, r/xApp 502 may inform RIC 500 to that a new instance of r/xApp 502 is to be instantiated.

In the event that RIC 500 generates the virtual clusters, RIC 500 and r/xApp 502 may perform steps 540-544 set forth in FIG. 5 and bypass steps 550-552. In the event that r/xApp 502 generates the virtual clusters, RIC 500 and r/xApp 502 may perform steps 550-52 set forth in FIG. 5 and bypass steps 540-544.

For example, if RIC 500 generates the virtual clusters the following may occur. r/xApp 502 may query regarding the potential virtual clusters for r/xApp 502 (540). For example, r/xApp 502 may request from RIC 500 an identification of potential virtual clusters, such as first virtual cluster 200A and/or second virtual cluster 200B. In the example where r/xApp 502 represents an rApp, r/xApp 502 may attempt to obtain a list of cells (and/or other resources) from RIC 500 that the new instance of the rApp is to manage. In some examples where r/xApp 502 sends the notification in step 530, that notification may be combined with or part of the query regarding potential virtual clusters for r/xApp 502.

RIC 500 may determine virtual clusters for r/xApp 502 (542). For example, RIC 500 may determine two (or more) virtual clusters based on an existing cluster (e.g., cluster 200). For example, RIC 500 may split an existing cluster (e.g., cluster 200) into two (or more) virtual clusters, assigning a first plurality of neighboring cells and/or base station(s) to a first virtual cluster (e.g., virtual cluster 200A) and a second plurality of neighboring cells and/or base station(s) to a second virtual cluster (e.g., virtual cluster 200B).

RIC 500 may notify r/xApp 502 of the potential virtual clusters (544). For example, RIC 500 may send a message to r/xApp 502 identifying first virtual cluster 200A and/or second virtual cluster 200B. Such an identification may include identifiers of specific assets, such as cells and/or base stations as being associated with one or more particular virtual clusters and/or geographical identifiers associated with one or more particular virtual clusters.

If r/xApp 502 generates the virtual clusters, the following may occur. r/xApp 502 may send a notification to RIC 500 of the virtual clusters for the application (550). For example, r/xApp 502 may determine virtual clusters based on information available to r/xApp 502, such as a geographic location information of resources of a cluster (e.g., cluster 200) being split into virtual clusters. For example, r/xApp 502 may send a message to RIC 500 identifying first virtual cluster 200A and/or second virtual cluster 200B. Such an identification may include identifiers of specific assets, such as cells and/or base stations as being associated with one or more particular virtual clusters and/or geographical identifiers associated with one or more particular virtual clusters. In some examples where r/xApp 502 sends the notification in step 530, that notification may be combined with or part of the notification of the virtual clusters for the application.

RIC 500 may send an acknowledgement (ACK) or negative acknowledgement (NACK) to r/xApp 502 (552) in response to the notification 550. In the case that RIC 500 sends a NACK, r/xApp 502 may repeat the generation of the virtual clusters so as to generate different virtual clusters than before, or, alternatively, RIC 500 may generate the virtual clusters to be used (see steps 542-544).

The following may be performed regardless of whether RIC 500 or r/xApp 502 generates the virtual clusters. RIC 500 may instantiate a new instance of the application (560). For example, RIC 500 may instantiate a new instance of r/xApp 502 to reduce resource utilization by an existing instance of r/xApp 502. For example, existing instance of r/xApp 502 may be responsible for handling cluster 200 that is being split. The new instance of r/xApp 502 may be instantiated to handle second virtual cluster 200B and the existing instance of r/xApp 502 may be relieved of handling second virtual cluster 200B and may, at least for the near term, be responsible for handling only first virtual cluster 200A.

The new instance of r/xApp 502 may begin a startup process and may register with RIC 500 (662). RIC 500 may configure A1/O1/O2/E2 RIC microservices to route new cluster messages (e.g., of cluster messages 316) for the second virtual cluster to new instance of r/xApp 502 (664). For example, RIC 500 may configure one or more microservices of O1 services manager, O2 services manager, O1 termination 168, O2 termination 169, A1 termination 156, and/or R1 termination 152 (of FIG. 1B) to route cluster messages from the second one or more resources of the second virtual cluster to the second instance of the application.

In this manner, any new messages for second virtual cluster 200B will be routed to/from the new application instance rather than the existing application instance, thus reducing the burden on, and compute resource usage of, the existing application instance.

In some examples, RIC 500 may notify the existing instance of r/xApp 502 of the cluster topology of the first virtual cluster (666). In some examples, RIC 500 may notify the new instance of r/xApp 502 of the cluster topology of the second virtual cluster (568).

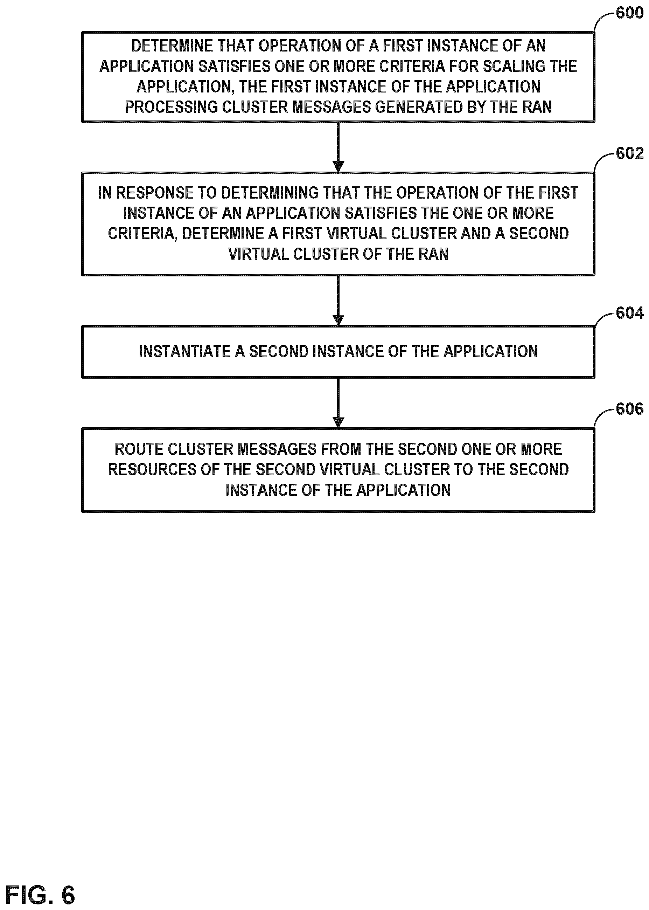

FIG. 6 is a flow diagram illustrating example scaling techniques for applications according to one or more aspects of this disclosure. The techniques of FIG. 6 are described with respect to computing system 300, but may be performed by any computing system capable of performing such techniques.

Computing system 300 may determine that operation of a first instance of an application satisfies one or more criteria for scaling the application (600). The first instance of the application may process cluster messages generated by the RAN. For example, computing system 300 may monitor the operation of first instance 332A of application 332 to determine that first instance 332A satisfies one or more scaling criteria 312 for scaling application 332. In the example where the one or more criteria include a compute usage threshold, computing system 300 may monitor a compute resource usage of first instance 332A of application 332 and compare compute resource usage to one or more thresholds. First instance 332A of application 332 may be associated with cluster 200. Based on the comparison of the compute resource usage to the one or more thresholds, computing system 300 may determine that the compute resource usage of first instance 332A of application 332 exceeds the one or more thresholds.

In response to determining that the operation of the first instance of the application satisfies the one or more criteria, computing system 300 may determine a first virtual cluster and a second virtual cluster of the RAN (602). For example, computing system 300 may determine first virtual cluster 200A and second virtual cluster 200B of cluster 200. First virtual cluster 200A includes first one or more resources of cluster 200 and second virtual cluster 200B includes second one or more resources of cluster 200, and the first one or more resources and the second one or more resources are different.

Computing system 300 may instantiate a second instance of the application (604). For example, computing system 300 may instantiate second instance 332B of application 332.

Computing system 300 may route cluster messages from the second one or more resources of the second virtual cluster to the second instance of the application (606). For example, computing system 300 may configure one or more microservices of microservice(s) 314 to route cluster messages 316 from the resources of second virtual cluster 200B to second instance 332B of application 332.

In some examples, computing system 300 may monitor compute resource usage of first instance 332A of application 332, and wherein the compute resource usage of first instance 332A of application 332 includes at least one of microprocessor usage, memory usage, or network usage. In such examples, the one or more criteria may include a compute resource usage threshold met or exceeded by the compute resource usage of the first instance of the application.

In some examples, memory of computing system 300 (e.g., storage device(s) 321) stores information indicative of geographic location information of resources of the RAN (e.g., of cluster 200 of the RAN). In some examples, the first one or more resources are geographically contiguous and the second one or more resources are geographically contiguous. For example, the first one or more resources are neighboring each other in a first geographic neighborhood and the second one or more resources are neighboring each other in a second geographic neighborhood.

In some examples, computing system 300 may receive a registration notification from second instance 332B of application 332. In some examples, to route the cluster messages from the second one or more resources of second virtual cluster 200B to second instance 332B of application 332, computing system 300 may route the cluster messages to second instance 332B based on the registration notification. In some examples, computing system 300 may send a message to second instance 332B of application 332 indicative of second virtual cluster 200B. For example, the message may be indicative of the identity of the second one or more resources of second virtual cluster 200B and/or geographic location information of the second one or more resources of second virtual cluster 200B. Such information may be of use to second instance 332B when determining future virtual clusters if second instance 332B is an instance of a scalable application and second instance 332B later satisfies the one or more criteria for scaling. In some examples, computing system 300 may send a notification to first instance 332A of application 332 indicative of the resource usage of first instance 332A of application 332 satisfying the one or more criteria.

In some examples, computing system 300 may receive, from first instance 332A of application 332, a query for virtual clusters for application 332, wherein the one or more criteria comprises the query. Computing system 300 may split, in response to the query, cluster 200 of the RAN into a plurality of virtual clusters, the plurality of virtual clusters including first virtual cluster 200A and second virtual cluster 200B. Computing system 300 may send, to first instance 332A of application 332, an indication of the plurality of virtual clusters.

In some examples, computing system 300 may receive, from first instance 332A of application 332, an indication of at least one of first virtual cluster 200A or second virtual cluster 200B, wherein the one or more criteria comprises the indication. Computing system 300 may send, to first instance 332A of application 332, an acknowledgement of the indication. In some examples, computing system 300 may determine first virtual cluster 200A and second virtual cluster 200B based on the indication. In some examples, cluster messages 316 conform to at least one of an O1 interface, an O2 interface, an A1 interface, or an E2 interface.

In some examples, first virtual cluster 200A and second virtual cluster 200B are virtual clusters of a first cluster (e.g., cluster 200) of a plurality of clusters of the RAN. In some examples, the first cluster includes the first one or more resources and the second one or more resources.

Therefore, from one perspective, there have been described approaches by which an example Radio Access Network Intelligent Controller (RIC) determines that operation of a first instance of an application satisfies one or more criteria for scaling the application, the first instance of the application processing cluster messages generated by the RAN. The RIC, in response to determining that the operation of the first instance of the application satisfies the one or more criteria, determines a first virtual cluster and a second virtual cluster of the RAN. The first virtual cluster includes first one or more resources of the RAN and the second virtual cluster includes second one or more resources of the RAN. The RIC instantiates a second instance of the application. The RIC routes cluster messages from the second one or more resources of the second virtual cluster to the second instance of the application.

Further examples of feature combinations taught by the present disclosure are set out in the following numbered clauses.

Clause 1. A Radio Access Network Intelligent Controller (RIC) for a radio access network (RAN), the RIC comprising: processor circuitry; and memory coupled to the processor circuitry, the memory storing instructions that, when executed, cause the processor circuitry to: determine that operation of a first instance of an application satisfies one or more criteria for scaling the application, the first instance of the application processing cluster messages generated by the RAN; in response to determining that the operation of the first instance of the application satisfies the one or more criteria, determine a first virtual cluster and a second virtual cluster of the RAN, wherein the first virtual cluster includes first one or more resources of the RAN and the second virtual cluster includes second one or more resources of the RAN, the first one or more resources of the RAN and the second one or more resources of the RAN being different; instantiate a second instance of the application; and route cluster messages from the second one or more resources of the second virtual cluster to the second instance of the application.

Clause 2. The RIC of clause 1, wherein the instructions further cause the processor circuitry to monitor compute resource usage of the first instance of the application, wherein the compute resource usage of the first instance of the application comprises at least one of microprocessor usage, memory usage, or network usage, and wherein the one or more criteria comprise a compute resource usage threshold met or exceeded by the compute resource usage of the first instance of the application.

Clause 3. The RIC of clause 1 or 2, wherein the memory further stores information indicative of geographic location information of resources of the RAN.

Clause 4. The RIC of clause 3, wherein the first one or more resources are geographically contiguous and the second one or more resources are geographically contiguous.

Clause 5. The RIC of any preceding clause, wherein to route the cluster messages, the instructions cause the processor circuitry to configure one or more microservices to route the cluster messages.

Clause 6. The RIC of any preceding clause, wherein the instructions further cause the processor circuitry to receive a registration notification from the second instance of the application, and wherein to route the cluster messages from the second one or more resources of the second virtual cluster to the second instance of the application, the instructions cause the processing circuitry to route the cluster messages to the second instance based on the registration notification.

Clause 7. The RIC of any preceding clause, wherein the instructions further cause the processing circuitry to send a message to the second instance of the application indicative of the second virtual cluster.

Clause 8. The RIC of any preceding clause, wherein the instructions further cause the processing circuitry to send a notification to the first instance of the application indicative of the operation of the first instance of the application satisfying the one or more criteria.

Clause 9. The RIC of any preceding clause, wherein the instructions further cause the processing circuitry to: receive, from the first instance of the application, a query for virtual clusters for the application, wherein the one or more criteria comprises the query; split, in response to the query, a cluster of the RAN into a plurality of virtual clusters, the plurality of virtual clusters comprising the first virtual cluster and the second virtual cluster; and send, to the first instance of the application, an indication of the plurality of virtual clusters.

Clause 10. The RIC of any preceding clause, wherein the instructions further cause the processing circuitry to: receive, from the first instance of the application, an indication of at least one of the first virtual cluster or the second virtual cluster, wherein the one or more criteria comprises the indication; and send, to the first instance of the application, an acknowledgement of the indication, wherein determining the first virtual cluster and the second virtual cluster comprises determining the first virtual cluster and the second virtual cluster based on the indication.

Clause 11. The RIC of any preceding clause, wherein the cluster messages conform to at least one of an O1 interface, an O2 interface, an A1 interface, or an E2 interface.

Clause 12. The RIC of any preceding clause, wherein the first virtual cluster and the second virtual cluster are virtual clusters of a first cluster of a plurality of clusters of the RAN, the first cluster comprising the first one or more resources and the second one or more resources.

Clause 13. A method comprising: determining, by a Radio Access Network Intelligent Controller (RIC), that operation of a first instance of an application satisfies one or more criteria for scaling the application, the first instance of the application processing cluster messages generated by a Radio Access Network (RAN); determining, by the RIC and in response to determining that the operation of the first instance of the application satisfies the one or more criteria, a first virtual cluster and a second virtual cluster of the RAN, wherein the first virtual cluster includes first one or more resources of the RAN and the second virtual cluster includes second one or more resources of the RAN, the first one or more resources of the RAN and the second one or more resources of the RAN being different; instantiating, by the RIC, a second instance of the application; and configuring, by the RIC, one or more microservices to route cluster messages from the second one or more resources of the second virtual cluster to the second instance of the application.

Clause 14. The method of clause 13, further comprising monitoring, by the RIC, compute resource usage of the first instance of the application, wherein the compute resource usage of the first instance of the application comprises at least one of microprocessor usage, memory usage, or network usage, and wherein the one or more criteria comprise a compute resource usage threshold met or exceeded by the compute resource usage of the first instance of the application.

Clause 15. The method of clause 13 or 14, further comprising storing, by the RIC and in memory, information indicative of geographic location information of resources of the RAN.

Clause 16. The method of clause 15, wherein the first one or more resources are geographically contiguous and the second one or more resources are geographically contiguous.

Clause 17. The method of any of clauses 13 to 16, further comprising receiving, by the RIC, a registration notification from the second instance of the application, and wherein routing the cluster messages from the second one or more resources of the second virtual cluster to the second instance of the application comprises routing the cluster messages to the second instance based on the registration notification prior to configuring the microservices.

Clause 18. The method of any of clauses 13 to 17, further comprising sending, by the RIC, a message to the second instance of the application indicative of the second virtual cluster.

Clause 19. The method of any of clauses 13 to 18, further comprising sending, by the RIC, a notification to the first instance of the application indicative of the operation of the first instance of the application satisfying the one or more criteria.

Clause 20. Computer-readable storage media, storing instructions, which when executed, cause processor circuitry of a Radio Access Network Intelligent Controller to: determine that operation of a first instance of an application satisfies one or more criteria for scaling the application, the first instance of the application processing cluster messages generated by the RAN; in response to determining that the operation of the first instance of the application satisfies the one or more criteria, determine a first virtual cluster and a second virtual cluster of the RAN, wherein the first virtual cluster includes first one or more resources of the RAN and the second virtual cluster includes second one or more resources of the RAN, the first one or more resources of the RAN and the second one or more resources of the RAN being different; instantiate a second instance of the application; and route cluster messages from the second one or more resources of the second virtual cluster to the second instance of the application.

The techniques described in this disclosure may be implemented, at least in part, in hardware, software, firmware or any combination thereof. For example, various aspects of the described techniques may be implemented within one or more programmable processors, including one or more microprocessors, digital signal processors (DSPs), application specific integrated circuits (ASICs), field programmable gate arrays (FPGAs), or any other equivalent integrated or discrete logic circuitry, as well as any combinations of such components. The term "processor" or "processing circuitry" may generally refer to any of the foregoing logic circuitry, alone or in combination with other logic circuitry, or any other equivalent circuitry. A control unit comprising hardware may also perform one or more of the techniques of this disclosure.

Such hardware, software, and firmware may be implemented within the same device or within separate devices to support the various operations and functions described in this disclosure. In addition, any of the described units, modules or components may be implemented together or separately as discrete but interoperable logic devices. Depiction of different features as modules or units is intended to highlight different functional aspects and does not necessarily imply that such modules or units must be realized by separate hardware or software components. Rather, functionality associated with one or more modules or units may be performed by separate hardware or software components or integrated within common or separate hardware or software components.

The techniques described in this disclosure may also be embodied or encoded in a computer-readable medium, such as a computer-readable storage medium or a computer-readable communication medium, containing instructions. Instructions embedded or encoded in a computer-readable medium may cause a programmable processor, or other processor, to perform the method, e.g., when the instructions are executed. Computer-readable media may include non-transitory computer-readable storage media and transient communication media. Computer readable storage media, which is tangible and non-transitory, may include random access memory (RAM), read only memory (ROM), programmable read only memory (PROM), erasable programmable read only memory (EPROM), electronically erasable programmable read only memory (EEPROM), flash memory, a hard disk, a compact disc read only memory (CD-ROM), a floppy disk, a cassette, magnetic media, optical media, or other computer-readable storage media. The term "computer-readable storage media" refers to physical storage media, and not signals, carrier waves, or other transient media. Computer-readable communication media may include carrier waves, transmission signals or the like. A computer-readable transmission medium may convey instructions between components of a single computer system and/or between plural separate computer systems.

## Claims

1. A Radio Access Network Intelligent Controller (RIC) for a radio access network (RAN), the RIC comprising:
processor circuitry; and
memory coupled to the processor circuitry, the memory storing instructions that, when executed, cause the processor circuitry to:
determine that operation of a first instance of an application satisfies one or more criteria for scaling the application, the first instance of the application processing cluster messages generated by the RAN;
in response to determining that the operation of the first instance of the application satisfies the one or more criteria, determine a first virtual cluster and a second virtual cluster of the RAN, wherein the first virtual cluster includes first one or more resources of the RAN and the second virtual cluster includes second one or more resources of the RAN, the first one or more resources of the RAN and the second one or more resources of the RAN being different;
instantiate a second instance of the application; and
route cluster messages from the second one or more resources of the second virtual cluster to the second instance of the application.

2. The RIC of claim 1, wherein the instructions further cause the processor circuitry to monitor compute resource usage of the first instance of the application, wherein the compute resource usage of the first instance of the application comprises at least one of microprocessor usage, memory usage, or network usage, and wherein the one or more criteria comprise a compute resource usage threshold met or exceeded by the compute resource usage of the first instance of the application.

3. The RIC of any of claims 1-2, wherein the memory further stores information indicative of geographic location information of resources of the RAN.

4. The RIC of claim 3, wherein the first one or more resources are geographically contiguous and the second one or more resources are geographically contiguous.

5. The RIC of any of claims 1-4, wherein to route the cluster messages, the instructions cause the processor circuitry to configure one or more microservices to route the cluster messages.

6. The RIC of any of claims 1-5, wherein the instructions further cause the processor circuitry to receive a registration notification from the second instance of the application, and wherein to route the cluster messages from the second one or more resources of the second virtual cluster to the second instance of the application, the instructions cause the processing circuitry to route the cluster messages to the second instance based on the registration notification.

7. The RIC of any of claims 1-6, wherein the instructions further cause the processing circuitry to send a message to the second instance of the application indicative of the second virtual cluster.

8. The RIC of any of claims 1-7, wherein the instructions further cause the processing circuitry to send a notification to the first instance of the application indicative of the operation of the first instance of the application satisfying the one or more criteria.

9. The RIC of any of claims 1-8, wherein the instructions further cause the processing circuitry to:
receive, from the first instance of the application, a query for virtual clusters for the application, wherein the one or more criteria comprises the query;
split, in response to the query, a cluster of the RAN into a plurality of virtual clusters, the plurality of virtual clusters comprising the first virtual cluster and the second virtual cluster; and
send, to the first instance of the application, an indication of the plurality of virtual clusters.

10. The RIC of any of claims 1-9, wherein the instructions further cause the processing circuitry to:
receive, from the first instance of the application, an indication of at least one of the first virtual cluster or the second virtual cluster, wherein the one or more criteria comprises the indication; and
send, to the first instance of the application, an acknowledgement of the indication,
wherein determining the first virtual cluster and the second virtual cluster comprises determining the first virtual cluster and the second virtual cluster based on the indication.

11. The RIC of any of claims 1-10, wherein the cluster messages conform to at least one of an O1 interface, an O2 interface, an A1 interface, or an E2 interface.

12. The RIC of any of claims 1-11, wherein the first virtual cluster and the second virtual cluster are virtual clusters of a first cluster of a plurality of clusters of the RAN, the first cluster comprising the first one or more resources and the second one or more resources.

13. A method comprising:
determining, by a Radio Access Network Intelligent Controller (RIC), that operation of a first instance of an application satisfies one or more criteria for scaling the application, the first instance of the application processing cluster messages generated by a Radio Access Network (RAN);
determining, by the RIC and in response to determining that the operation of the first instance of the application satisfies the one or more criteria, a first virtual cluster and a second virtual cluster of the RAN, wherein the first virtual cluster includes first one or more resources of the RAN and the second virtual cluster includes second one or more resources of the RAN, the first one or more resources of the RAN and the second one or more resources of the RAN being different;
instantiating, by the RIC, a second instance of the application; and
configuring, by the RIC, one or more microservices to route cluster messages from the second one or more resources of the second virtual cluster to the second instance of the application.

14. The method of claim 13, further comprising the steps corresponding to the functionality recited in any of claims 2-12.

15. A computer-readable medium comprising instructions that, when executed by one or more programmable processors, cause the one or more programmable processors to perform the method recited by any of claims 13-14.
